# EUROPEAN PATENT APPLICATION

(11) **EP 4 553 973 A1**
(43) Date of publication of application: **14.05.2025**
(21) Application number: 23217835.0
(22) Date of filing: 19.12.2023
(51) Int. Cl.: H01M 50/152, H01M 50/342, H01M 50/179, H01M 50/188

(54) **SECONDARY BATTERY**

(30) Priority: 13.11.2023 CN 202323062748 U
(71) Applicant: AESC Japan Ltd., Yokohama-Shi, Kanagawa 220-0012 (JP)
(72) Inventor: YU, He, Jiangyin City, Wuxi City, 214443 (CN)
(74) Representative: Becker, Eberhard

(57) **Abstract**

A secondary battery (100) including a housing (10), an electrode terminal (20), an electrode assembly (40) disposed in the housing (10), and a current collecting member (50) is provided. The housing (10) includes an end wall (101) including a terminal hole (121) and an explosion-proof notch (122) and a side wall (11). An area surrounded by the explosion-proof notch (122) on the end wall (101) is an explosion-proof area (123). The electrode terminal (20) is fixed to the end wall (101). A side of the electrode assembly (40) includes a first electrode tab (41). The current collecting member (50) includes a main body portion (51) connected to the first electrode tab (41) and a terminal connecting portion (52) connected to the electrode terminal (20). A deformable portion (511) of the main body portion (51) maintains the connection between the electrode terminal (20) and the main body portion (51).

## Description

### BACKGROUND

### Technical Field

The disclosure relates to the field of battery technology, specifically to a secondary battery.

### Description of Related Art

In the related art, in order to ensure the normal pressure relief of the secondary battery and reduce the risk of battery explosion, explosion-proof notches are usually disposed on the housing as an explosion-proof structure, so that when the pressure in the housing is greater than the threshold value, the explosion-proof notch breaks, and the pressure relief of the secondary battery is realized. In the structure of existing secondary batteries, generally, the explosion-proof notch and the electrode terminal are respectively disposed at two ends of the secondary battery in the height direction, which causes the surfaces of both ends of the secondary battery to be occupied and unable to be used as cooling surfaces. After the secondary battery assembly is assembled into a battery module, the battery module can only be cooled by disposing cooling plates between the sides of adj acent secondary batteries. This cooling method increases the lateral space of the battery module and is not beneficial to improving the energy density of the battery module.

However, if the explosion-proof notch and the electrode terminal are disposed on the same side of the secondary battery, there is a risk that the electrode terminal and the current collecting member in the explosion-proof area fly out from the housing when the explosion-proof notch breaks, which may cause serious problems such as short circuits and thermal runaway between other secondary batteries in the battery module, thereby increasing safety risks of the battery module level.

### SUMMARY

In view of the above shortcomings of the related art, the disclosure provides a secondary battery, so as to improve the phenomenon that, when the explosion-proof notch breaks, structural components such as the electrode terminal and the current collecting member fly out from the housing and cause technical problems such as short circuits and thermal runaway between other secondary batteries in the battery module.

In order to achieve the above purposes and other related purposes, the disclosure provides a secondary battery, which includes a housing, an electrode terminal, an electrode assembly, and a current collecting member. The housing includes an end wall and a side wall surrounding the end wall. The end wall includes a terminal hole and an explosion-proof notch surrounding the terminal hole. An area surrounded by the explosion-proof notch on the end wall is an explosion-proof area. The electrode terminal covers the terminal hole and is fixed on the end wall, and an insulation sealing member is disposed between the electrode terminal and the end wall. The electrode assembly is disposed in the housing, and a side of the electrode assembly facing the end wall includes a first electrode tab. The current collecting member is disposed in the housing and located between the first electrode tab and the electrode terminal. The current collecting member includes a main body portion and a terminal connecting portion, and the main body portion is connected to the first electrode tab. The terminal connecting portion is connected to an inner surface of the electrode terminal facing the electrode assembly. The main body portion includes a deformable portion connected to the terminal connecting portion. When the internal pressure of the housing is greater than a threshold value, the explosion-proof notch breaks, the explosion-proof area is at least partially separated from the housing and drives the electrode terminal to move to a side away from the electrode assembly, and the deformable portion deforms to maintain the connection between the electrode terminal and the main body portion.

In an example of the secondary battery of the disclosure, the terminal connecting portion is disposed in a central area of the main body portion, and the deformable portion includes a first bending structure surrounding the terminal connecting portion.

In an example of the secondary battery of the disclosure, the first bending structure includes a first recess and a first protrusion, the first recess is recessed from a side of the main body portion to another side of the main body portion, the first protrusion is formed correspondingly on the other side of the main body portion, and the first protrusion is arranged in an annular shape and surrounds an outer periphery of the terminal connecting portion.

In an example of the secondary battery of the disclosure, the first protrusion is disposed on a side of the main body portion facing the end wall, and the first recess is disposed on a side of the main body portion facing the electrode assembly.

In an example of the secondary battery of the disclosure, the welding connection strength between the electrode terminal and the terminal connecting portion is greater than 50N.

In an example of the secondary battery of the disclosure, the electrode terminal is disposed with a thinned area along the thickness direction, and the terminal connecting portion and the thinned area are abutted against each other and connected by welding.

In an example of the secondary battery of the disclosure, the electrode terminal is disposed with a second recess on a side facing the electrode assembly, the terminal connecting portion is disposed with a second protrusion on a side facing the electrode terminal, and the second protrusion and the second recess are abutted against each other and connected by welding.

In an example of the secondary battery of the disclosure, the terminal connecting portion and the main body portion are separately structured, and the thickness of the terminal connecting portion is greater than the thickness of the main body portion.

In an example of the secondary battery of the disclosure, a welding mark is formed between the terminal connecting portion and the main body portion, the welding mark is an annular structure, and a quantity of rounds of the welding mark is at least two rounds.

In an example of the secondary battery of the disclosure, the main body portion includes a supporting portion disposed annularly, the terminal connecting portion is located in a central area of the supporting portion, the deformable portion includes a weak portion extending from the supporting portion to the terminal connecting portion, and the terminal connecting portion is connected to the main body portion through the weak portion.

In an example of the secondary battery of the disclosure, the weak portion includes a bend-guiding portion that guides the weak portion to bend.

In an example of the secondary battery of the disclosure, the bend-guiding portion includes a second bending portion, and the second bending portion is disposed on a side of the weak portion close to the supporting portion.

In an example of the secondary battery of the disclosure, the bend-guiding portion includes a crease, and the crease is disposed on a side of the weak portion close to the supporting portion.

In an example of the secondary battery of the disclosure, the main body portion further includes a plurality of electrode tab connecting portions, the plurality of electrode tab connecting portions extend from the supporting portion toward the center of the electrode assembly, and the multiple electrode tab connecting portions are spaced apart from the terminal connecting portion.

In an example of the secondary battery of the disclosure, along the height direction of the secondary battery, the orthographic projection of the supporting portion is located outside of the orthographic projection of the explosion-proof area and is not overlapped with the orthographic projection of the explosion-proof area.

In the secondary battery according to the disclosure, the explosion-proof notch and the electrode terminal are both disposed on the end wall of the housing, in this way, the same side arrangement between the explosion-proof notch and the electrode terminal can be realized, so that the electrical connection between the battery module levels and the thermal runaway systems may be installed on the same side of the battery module. Therefore, the cooling system can be arranged on another side of the battery module to reduce occupying the lateral dimension of the battery module, thus beneficial to improving the energy density of the battery module. At the same time, in the secondary battery according to the disclosure, a deformable portion is disposed on the main body portion of the current collecting member. When the explosion-proof area is separated from the housing, the deformable portion deforms to maintain the connection between the electrode terminal and the main body portion, so as to prevent the explosion-proof area and the electrode terminal on the end wall from flying out from the housing, which can avoid serious problems such as short circuits and thermal runaway between other secondary batteries, and the safety performance of the battery module is improved.

### BRIEF DESCRIPTION OF THE DRAWINGS

In order to describe the embodiments of the disclosure or the technical solutions in the related art clearly, the drawings needed to describe the embodiments or the related art are briefly introduced below. Notably, the drawings in the following description are merely some embodiments of the disclosure. For persons of ordinary skill in the art, other embodiments may be obtained based on the drawings without exerting creative efforts.
FIG. 1 is a main view of a secondary battery according to an embodiment of the disclosure.
FIG. 2 is an axial side view of the secondary battery according to an embodiment of the disclosure.
FIG. 3 is a partial cross-sectional view along an A-A direction in FIG. 1.
FIG. 4 is a partial enlarged view of installation positions of an electrode terminal and a current collecting member of the secondary battery according to an embodiment of the disclosure.
FIG. 5 is a schematic exploded view of installation positions of the current collecting member and an electrode assembly of the secondary battery according to an embodiment of the disclosure.
FIG. 6 is an axial side view of an overall structure of the current collecting member of the secondary battery according to an embodiment of the disclosure.
FIG. 7 is a top view of the current collecting member of the secondary battery according to an embodiment of the disclosure.
FIG. 8 is a cross-sectional view along a B-B direction in FIG. 7.
FIG. 9 is a schematic distribution view of a first protrusion on a main body portion of the secondary battery according to an embodiment of the disclosure.
FIG. 10 is a schematic structural view of a second protrusion of the secondary battery according to an embodiment of the disclosure.
FIG. 11 is a partial structural cross-sectional view of the secondary battery according to another embodiment of the disclosure.
FIG. 12 is a schematic exploded view of installation positions of the current collecting member and the electrode assembly of the secondary battery according to another embodiment of the disclosure.
FIG. 13 is an axial side view of an overall structure of the current collecting member of the secondary battery according to another embodiment of the disclosure.
FIG. 14 is a top view of the current collecting member of the secondary battery according to another embodiment of the disclosure.
FIG. 15 is a cross-sectional view along a C-C direction in FIG. 14.
FIG. 16 is a top view of the current collecting member of the secondary battery according to yet another embodiment of the disclosure.
FIG. 17 is a cross-sectional view along a D-D direction in FIG. 16.
FIG. 18 is a schematic view of an installation position of a third insulation member of the secondary battery according to an embodiment of the disclosure.
FIG. 19 is a schematic view of an installation position of an insulation tape of the secondary battery according to an embodiment of the disclosure.
FIG. 20 is a schematic exploded view of a first insulation member of the secondary battery according to an embodiment of the disclosure.
FIG. 21 is a cross-sectional view of an overall structure of the first insulation member of the secondary battery according to an embodiment of the disclosure.
FIG. 22 is a schematic view of an overall structure of a battery assembly according to an embodiment of the disclosure.
FIG. 23 is a schematic structural view of the battery assembly installed on a vehicle according to the disclosure.

### DESCRIPTION OF THE EMBODIMENTS

The following describes the implementation of the disclosure through specific examples. Persons skilled in the art may comprehend other advantages and effects of the disclosure from the contents disclosed in this specification. The disclosure may also be implemented or applied through other different specific implementations. Various details in this specification may also be modified or changed in various ways based on different viewpoints and applications without departing from the spirit of the disclosure. It should be noted that, as long as there is no conflict, the following embodiments and the features in the embodiments may be combined with each other. It should also be understood that, the terms used in the embodiments of the disclosure is for describing specific embodiments, but not for limiting the scope of the disclosure. For the test methods not specified with specific conditions in the following examples, generally, regular conditions or conditions recommended by each manufacturer are adopted.

When an embodiment provides a numerical range, it should be understood that, unless otherwise stated in the present disclosure, the two endpoints of each numerical range and any value between the two endpoints may be selected. Unless otherwise defined, all technical and scientific terms used in the present disclosure are consistent with the knowledge of the related art and the description of the present disclosure by those skilled in the art. They may also be used with the methods and methods described in the embodiments of the present disclosure. Equipment and materials are similar or equivalent to any methods, equipment and materials of the related art to implement the present disclosure.

It should be noted that, terms such as "upper", "lower", "left", "right", "middle", and "one" cited in this specification are merely for convenience of description and are not used to limit the scope of the disclosure. The changes or adjustments in the relative relationships, provided there is no substantial change in the technical content, shall also be deemed to be within the scope of the implementations according to the disclosure.

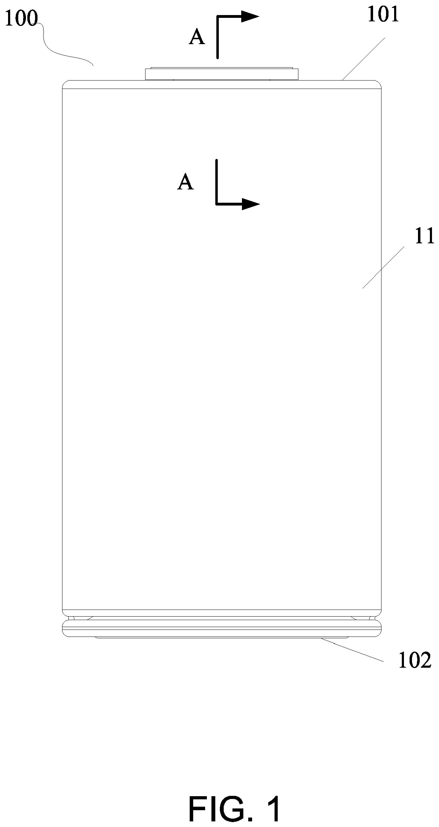

Please refer to FIG. 1 to FIG. 23. The disclosure provides a secondary battery 100, a battery assembly 200, and an electronic apparatus 300, the secondary battery 100 can realize the same side arrangement between the explosion-proof notch 122 and the electrode terminal 20, reducing the occupation of the lateral dimension of the battery module level, which is beneficial to improving the energy density of the battery module, and can also provide a deformable portion 511, by which the connection between the electrode terminal 20 and the main body portion 51 can be maintained when an explosion-proof area 123 is separated from a housing 10, thereby reducing the probability that the explosion-proof area 123 and the electrode terminal 20 fly out from the housing 10, improving the safety of the battery module level.

Referring to FIG. 1 to FIG. 3, the structure of the secondary battery 100 is further described. The secondary battery 100 includes the housing 10, the electrode terminal 20, an electrode assembly 40, and a current collecting member 50.

A containing cavity is formed in the housing 10 for containing the electrode assembly 40, electrolyte (not shown), and other components. The containing cavity may be open at one end or open at two ends. Specifically, the size of the housing 10 may be determined according to the specific size of the electrode assembly 40, for example, specifications such that the diameter is 46mm, the height is 80mm, 95mm, and 120mm. The housing 10 may be made of a variety of materials, such as copper, iron, aluminum, steel, aluminum alloy. In order to prevent the housing 10 from rusting during long-term use, a layer of anti-rust material, such as metal nickel, may also be coated on the surface of the housing 10. In an embodiment of the secondary battery 100 of the disclosure, the housing 10 includes a cylindrical side wall 11 and a first end wall 101 and a second end wall 102 respectively closing two ends of the side wall 11. The first end wall 101 is integrally connected to an end of the side wall 11, and the second end wall 102 is sealed and connected to another end of the side wall 11 by welding or mechanical external force. In another embodiment of the disclosure, it may be that the first end wall 101 is sealed and connected to an end of the side wall 11 by welding or mechanical external force, and the second end wall 102 is integrally connected to another end of the side wall 11. In other embodiments, it may be that the first end wall 101 and the second end wall 102 are sealed and connected to the two ends of the side wall 11 respectively by welding or mechanical external force.

The first end wall 101 includes a terminal hole 121 and an explosion-proof notch 122 surrounding the terminal hole 121. An area surrounded by the explosion-proof notch 122 on the first end wall 101 is an explosion-proof area 123. The shape of the explosion-proof area 123 may be a rectangular structure, a circular structure, or other polygonal structures. In this embodiment, the shape of the explosion-proof area 123 is a circular structure. The position of the explosion-proof notch 122 is a weak area of the first end wall 101. When the air pressure inside the secondary battery 100 exceeds a threshold value, the explosion-proof notch 122 breaks open to release the pressure inside the housing 10, and the directional blasting of the secondary battery 100 is completed. The electrode terminal 20 covers the terminal hole 121 and is fixed on the first end wall 101. An insulation sealing member 30 is disposed between the terminal electrode 20 and the first end wall 101. The shape of the terminal hole 121 may be a round hole, a square hole, or other polygonal structures, as long as the connection requirement of the electrode terminal 20 and the fixed connection of the first end wall 101 are met. The terminal hole 121 may be disposed in the central area of the first end wall 101 or in the outer peripheral area of the first end wall 101, as long as being corresponding to the installation position of the electrode terminal 20. In this embodiment, the terminal hole 121 is a round hole structure, and the terminal hole 121 and the explosion-proof area 123 are coaxially disposed on the first end wall 101.

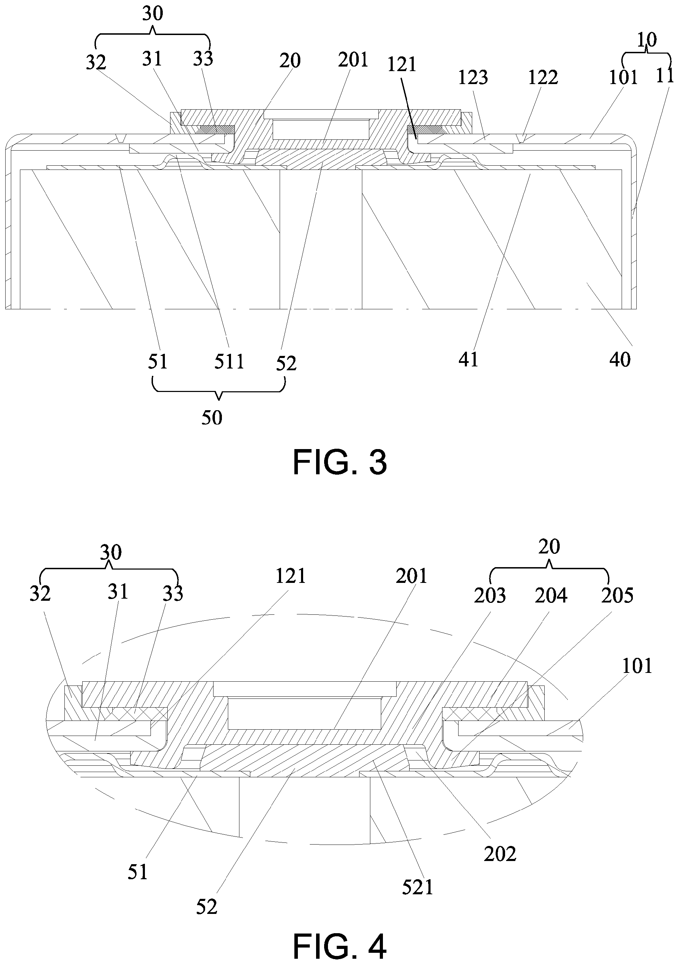

The fixed connection methods between the electrode terminal 20 and the first end wall 101 may be many, for example, the electrode terminal 20 may be connected to the first end wall 101 by riveting or may be connected to the first end wall 101 by adhesive, as long as the fixed connection strength requirements of the electrode terminal 20 and the first end wall 101 are met. When the electrode terminal 20 is fixed on the first end wall 101, the electrode terminal 20 may penetrate the terminal hole 121 and extend into the interior of the housing 10, or it may be that the terminal hole 121 is not penetrated, and the electrode terminal 20 is completely disposed on the outer side of the first end wall 101, as long as ensuring that the electrode terminal 20 may completely cover the terminal hole 121. In this embodiment, the electrode terminal 20 penetrates the terminal hole 121 and is fixedly installed on the first end wall 101, and the insulation sealing member 30 is sandwiched between the electrode terminal 20 and the first end wall 101 to realize the insulated and sealed connection between the electrode terminal 20 and the first end wall 101. Specifically, referring to FIG. 4, in an embodiment of the disclosure, the electrode terminal 20 includes a conductive portion 203, a first fixing portion 204, and a second fixing portion 205, the conductive portion 203 is a cylindrical structure. The conductive portion 203 passes through the terminal hole 121. The first fixing portion 204 is disposed in the circumferential direction of the outer end (the end away from a side of the electrode assembly 40) of the conductive portion 203 and is clamped at the outer end (away from a side of the electrode assembly 40) of the first end wall 101. The second fixing portion 205 is disposed in the circumferential direction of the inner end (the end facing a side of the electrode assembly 40) of the conductive portion 203 and is clamped at the inner side (facing a side of the electrode assembly 40) of the first end wall 101. The electrode terminal 20 realizes the insulating sealing connection with the first end wall 101 through the insulation sealing member 30.

As shown in FIG. 3 and FIG. 4, the electrode assembly 40 is contained in the housing 10. The electrode assembly 40 is a component which causes an electrochemical reaction in the secondary battery 100. One or more electrode assemblies 40 may be contained within the housing 10. The electrode assembly 40 is mainly formed by winding or stacking positive electrode pieces and negative electrode pieces, and generally, a separator is disposed between the positive electrode piece and the negative electrode piece. The positive electrode piece includes a positive electrode current collector and a positive electrode active material layer, and the positive electrode active material layer is coated on the surface of the positive electrode current collector. The positive electrode current collector includes a positive electrode coating area and a positive electrode tab connected to the positive electrode coating area, the positive electrode coating area is coated with the positive electrode active material layer, and the positive electrode tab is not coated with the positive electrode active material layer. The negative electrode piece includes a negative electrode current collector and a negative electrode active material layer, and the negative electrode active material layer is coated on the surface of the negative electrode current collector. The negative electrode current collector includes a negative electrode coating area and a negative electrode tab connected to the negative electrode coating area, the negative electrode coating area is coated with the negative electrode active material layer, and the negative electrode tab is not coated with the negative electrode active material layer. Taking lithium-ion batteries as an example, the material of the positive electrode current collector may be aluminum, the positive electrode active material layer includes a positive electrode active material, and the positive electrode active material may be lithium cobalt oxide, lithium iron phosphate, ternary lithium, or lithium manganate, etc. The material of the negative electrode current collector may be copper, the negative electrode active material layer includes a negative electrode active material, and the negative electrode active material may be carbon or silicon. The material of the separator may be PP (polypropylene) or PE (polyethylene), etc. In order to protect and insulate the battery core, the electrode assembly 40 may also be covered with an insulation film. The insulation film may be synthesized from PP, PE, PET, PVC, or other polymer materials.

Referring to FIG. 3 and FIG. 4, in an example of the secondary battery 100 of the disclosure, the electrode assembly 40 is sealed and installed in the housing 10. The electrode assembly 40 is disposed with a first electrode tab 41 and a second electrode tab respectively at two ends of the secondary battery 100 in the height direction, and the electrode properties of the first electrode tab 41 and the second electrode tab are opposite, in which the first electrode tab 41 faces a side of the first end wall 101, and the first electrode tab 41 is the positive electrode tab. It should be noted that, in other embodiments, the first electrode tab 41 may also be a negative electrode tab, and the second electrode tab 41 may be a positive electrode tab.

Referring to FIG. 3 to FIG. 6, the current collecting member 50 is disposed in the housing 10 and located between the first electrode tab 41 and the electrode terminal 20. The current collecting member 50 includes a main body portion 51 and a terminal connecting portion 52. The main body portion 51 is disposed surrounding the terminal connecting portion 52. The main body portion 51 and the terminal connecting portion 52 may be integrally formed and connected, or may be connected by welding, or any other connection method that meets the connection requirements. The main body portion 51 is fixedly connected to the first electrode tab 41, and the terminal connecting portion 52 and the electrode terminal 20 is fixedly connected toward a side of the electrode assembly 40. The fixed connection method may be a welding connection, an adhesive connection, or any other method that meets the connection requirements. In this embodiment, the main body portion 51 and the first electrode tab 41, and the terminal connecting portion 52 and the electrode terminal 20 are welded and fixedly connected.

Referring to FIG. 3, FIG. 5, and FIG. 6, in the embodiment of the disclosure, the main body portion 51 includes a deformable portion 511 connected to the terminal connecting portion 52, when the internal pressure of the housing 10 is greater than the threshold value, the explosion-proof notch 122 breaks, the explosion-proof area 123 is at least partially separated from the housing 10. With the effect of the internal pressure of the housing 10, when being separated from the housing 10, the explosion-proof area 123 drives the electrode terminal 20 to move to a side away from the electrode assembly 40. At the same time, the electrode terminal 20 drives the terminal connecting portion 52 to move relative to the main body portion 51, at this time, the deformable portion 511 deforms to maintain a connected status between at least a part of the terminal connecting portion 52 and the main body portion 51. The deformable portion 511 and the terminal connecting portion 52 may be connected in various ways. For example, the deformable portion 511 may be directly connected to the terminal connecting portion 52, or the deformable portion 511 may be indirectly connected to the terminal connecting portion 52. The deformable portion 511 and the terminal connecting portion 52 may be formed separately and then connected by welding, or the deformable portion 511 and the terminal connecting portion 52 may be integrally formed and connected, etc., as long as the connection strength requirement between the deformable portion 511 and the terminal connecting portion 52 is met.

The deformable portion 511 may have various options of specific structures. For example, the deformable portion 511 may have a bending structure, when the explosion-proof notch 122 is not broken, the bending structure is in a bending state, when the explosion-proof notch 122 breaks and the explosion-proof area 123 is separated from the housing 10, with the effect of the internal pressure, the bending structure changes to a straightened state, that is, by changing from bending to straightening, the change of the length of the deformable portion 511 in the axial direction is realized to meet the axial displacement requirement between the explosion-proof area 123 and the housing 10, thereby ensuring that the pressure relief area on the first end wall 101 is sufficient. The deformable structure may be a foldable structure, when the explosion-proof notch 122 is not broken, the foldable structure is in a flat state, when the explosion-proof notch 122 breaks and the explosion-proof area 123 is separated from the housing 10, with the effect of the internal pressure, the foldable structure is folded toward the side away from the electrode assembly 40 to realize the displacement change of the deformable portion 511 in the axial direction, thereby meeting the axial displacement requirement between the explosion-proof area 123 and the housing 10 and ensuring that the pressure relief area on the first end wall 101 is sufficient. The deformable structure may be a flexible conductive member. When the explosion-proof notch 122 is not broken, the flexible conductive portion is in a relaxed state, when the explosion-proof notch 122 breaks and the explosion-proof area 123 is separated from the housing 10, with the effect of the internal pressure, the flexible conductive member moves toward the side away from the electrode assembly 40 and changes to a stretched state to realize the displacement of the deformable portion 511 in the axial direction, thereby meeting the axial displacement requirement between the explosion-proof area 123 and the housing 10 and ensuring that the pressure relief area on the first end wall 101 is sufficient. In addition, the deformable structure may also be an elastic conductive member. When the explosion-proof notch 122 is not broken, the elastic conductive member is in a compressed state, when the explosion-proof notch 122 breaks and the explosion-proof area 123 is separated from the housing 10, with the effect of the elastic force and the internal pressure, the elastic conductive member pops up toward the side away from the electrode assembly 40 to realize the displacement of the deformable portion 511 in the axial direction, thereby meeting the axial displacement requirement between the explosion-proof area 123 and the housing 10 and ensuring that the pressure relief area on the first end wall 101 is sufficient.

In the secondary battery 100 according to the disclosure, the explosion-proof notch 122 and the electrode terminal 20 are both disposed on the first end wall 101 of the housing 10, in this way, the same side arrangement between the explosion-proof notch 122 and the electrode terminal 20 can be realized, so that the electrical connection between the battery module levels and the thermal runaway systems may be installed on the same side of the battery module. Therefore, the cooling system can be arranged on another side of the battery module to reduce occupying the lateral dimension of the battery module, thus beneficial to improving the energy density of the battery module. At the same time, in the secondary battery 100 according to the disclosure, the deformable portion 511 is disposed on the main body portion 51 of the current collecting member 50. When the explosion-proof area 123 is separated from the housing 10, the deformable portion 511 deforms to generate a certain displacement of the terminal connecting portion 52 relative to the main body portion 51 in the axial direction. On the one hand, when the explosion-proof area 123 is separated from the housing 10, the explosion-proof area 123 can drive the electrode terminal 20 and the terminal connecting portion 52 to generate a certain displacement in the axial direction, so that the pressure relief area on the first end wall 101 is sufficient, thereby meeting the pressure relief requirement of the secondary battery 100. On the other hand, the deformable portion 511 deforms to offset a part of the pulling force borne by the terminal connecting portion 52 toward the outside of the housing 10, thereby reducing the probability of the terminal connecting portion 52 separating from the main body portion 51. Therefore, the probability that the explosion-proof area 123 and the electrode terminal 20 fly out from the housing 10 can be reduced, thus avoiding serious problems such as short circuits and thermal runaway between other secondary batteries 100, and the safety performance of the battery module is improved.

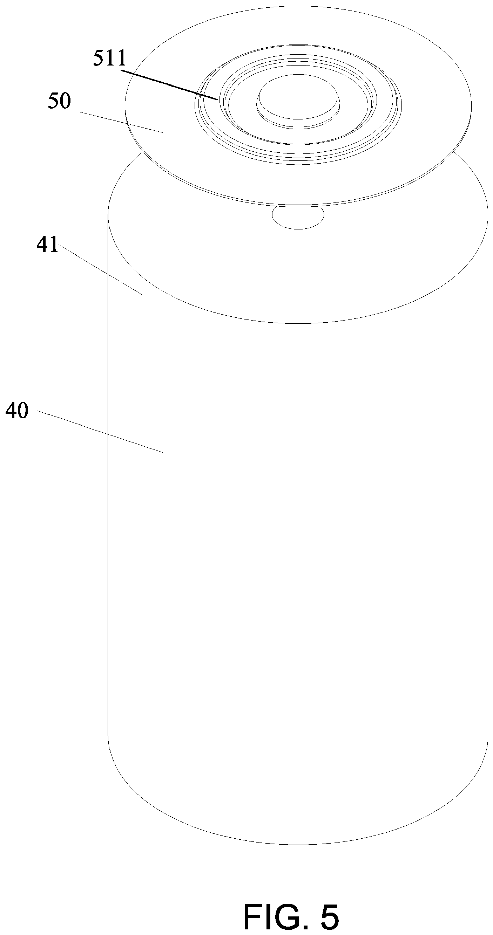

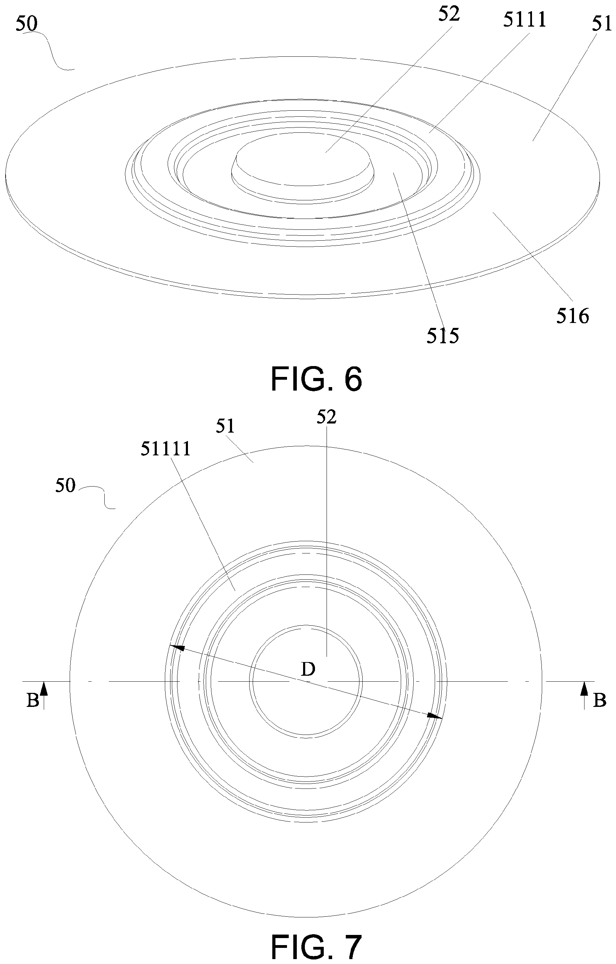

Please refer to FIG. 5 to FIG. 8. In an example of the secondary battery 100 of the disclosure, the terminal connecting portion 52 is disposed in the central area of the main body portion 51, and the deformable portion 511 includes a first bending structure 5111 surrounding the terminal connecting portion 52. The first bending structure 5111 may be a circular ring structure surrounding the outer periphery of the terminal connecting portion 52 or may be any closed structure such as a rectangular ring structure. The cross-sectional shape of the first bending structure 5111 may be a protrusion structure, a wavy structure, or a protrusion-recess structure, etc., as long as the first bending structure 5111 can deform to generate axial displacement along the axial direction of the secondary battery 100 under the effect of the internal pressure of the housing 10 when the explosion-proof notch 122 breaks. In this embodiment, referring to FIG. 6, the main body portion 51 includes a first area 515 and a second area 516 surrounding the outer periphery of the first area 515. The terminal connecting portion 52 is connected to the first area 515, the side of the first bending structure 5111 close to the terminal connecting portion 52 is connected to the first area 515, and another side of the first bending structure 5111 away from the terminal connecting portion 52 is connected to the second area 516, thereby realizing the indirect connection between the first bending structure 5111 and the terminal connecting portion 52. Certainly, in other embodiments, the first bending structure 5111 may also be directly connected to the terminal connecting portion 52. In this embodiment, when the main body portion 51 is connected to the first electrode tab 41 by welding, it may be that the first area 515 and the first electrode tab 41 are connected by welding, or it may be that the second area 516 and the first electrode tab 41 are connected by welding, or it may be that both the first area 515 and the second area 516 are connected with the first electrode tab 41 by welding, as long as the welding connection requirement between the first electrode tab 41 and the main body portion 51 is met. By disposing the first bending structure 5111, during the separation process of the explosion-proof area 123 from the housing 10, the first bending structure 5111 generates an axial deformation to meet the displacement requirement of the explosion-proof area 123 driving the electrode terminal 20 and the terminal connecting portion 52 along the axial direction, thereby forming a sufficient pressure relief area on the first end wall 101 and meeting the pressure relief requirement of the secondary battery 100. At the same time, since the first bending structure 5111 is connected to the first area 515 and the second area 516, when the explosion-proof area 123 is separated from the housing 10, a pulling force is formed between the terminal connecting portion 52 with respect to the first area 515 and the second area 516, which can reduce the probability that the explosion-proof area 123, the electrode terminal 20, and the terminal connecting portion 52 fly out from the housing 10, thereby avoiding serious problems such as short circuits and thermal runaway between other secondary batteries in the battery module, and the safety performance of the battery module is improved.

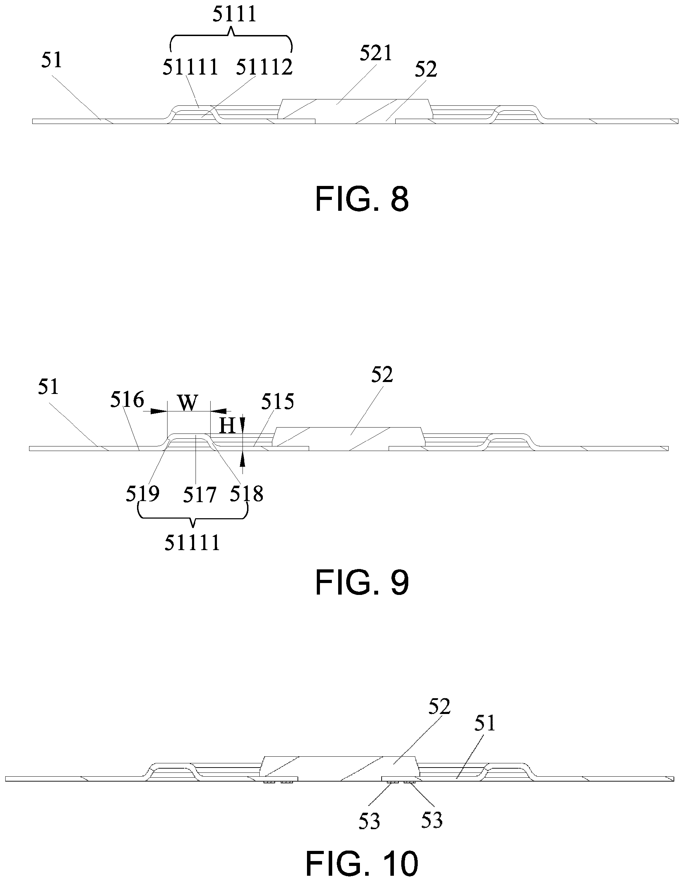

Please refer to FIG. 3 and FIG. 8. In an example of the secondary battery 100 of the disclosure, the first bending structure 5111 includes a first recess 51112 and a first protrusion 51111. The first recess 51112 is recessed from a side of the main body portion 51 toward another side of the main body portion 51, and a first protrusion 51111 is formed correspondingly on the other side of the main body portion 51. Along the height direction of the secondary battery 100, the protrusion direction of the first protrusion 51111 is not limited and may be, for example, a protrusion toward the side facing the electrode assembly 40 or a protrusion toward the side away from the electrode assembly 40. With this arrangement, on the one hand, when the explosion-proof area 123 is separated from the housing 10, the first bending structure 5111 can quickly generate the axial deformation, thereby increasing the speed at which the explosion-proof area 123 drives the electrode terminal 20 and the terminal connecting portion 52 to move along the axial direction, increasing the timeliness of the pressure relief of the secondary battery 100. On the other hand, the disposition also facilitates the integrated stamping molding of the first bending structure 5111 and improves the efficiency of forming the first bending structure 5111. In addition, the disposition of the first protrusion 51111 and the second recess 202 is also beneficial to improving the stiffness of the main body portion 51 and reducing the stress deformation generated when the main body portion 51 and the first electrode tab 41 are being welded to be connected.

Although the first protrusion 51111 may be a protrusion toward the side facing the electrode assembly 40 or may be a protrusion toward the side away from the electrode assembly 40, preferably, please refer to FIG. 3 to FIG. 8. In an example of the secondary battery 100 according to the disclosure, the first protrusion 51111 is disposed on the side of the main body portion 51 facing the first end wall 101, that is, the first protrusion 51111 protrudes toward the side of the first end wall 101. The first recess 51112 is disposed on the side of the main body portion 51 facing the electrode assembly 40, that is, the first recess 51112 is recessed toward the side away from the electrode assembly 40. With this arrangement, in the height direction of the secondary battery 100, the first protrusion 51111 does not abut against the first electrode tab 41, which does not affect the welding connection between the first electrode tab 41 and the main body portion 51 and is beneficial to the welding connection between the electrode tab 41 and the current collecting member 50.

Referring to FIG. 7, in an example of the secondary battery 100 according to the disclosure, the first protrusion 51111 is arranged in an annular shape and surrounds the outer periphery of the terminal connecting portion 52. The specific position of the first protrusion 51111 relative to the terminal connecting portion 52 is not limited. The terminal connecting portion 52 may be located at the central position of the area surrounded by the first protrusion 51111 or may be located at other positions of the area surrounded by the first protrusion 51111, as long as the first protrusion 51111 is arranged in an annular shape and surrounds the outer periphery of the terminal connecting portion 52. With this arrangement, the stress concentration generated by the first protrusion 51111 is small, which can improve the consistency of the overall strength of the first protrusion 51111. Further, in another embodiment of the disclosure, the first protrusion 51111 and the terminal connecting portion 52 are coaxially arranged, which not only facilitates the positioning processing between the first protrusion 51111 and the terminal connecting portion 52, but also enables the first protrusion 51111 and the terminal connecting portion 52 to obtain a uniform connection force in the circumferential direction, so as to ensure the uniformity of deformation of the first bending structure when the explosion-proof notch is separated from the housing 10, thereby ensuring the consistency of the pressure relief area and the pressure relief effect of the secondary battery 100.

Referring to FIG. 7 to FIG. 9, in an example of the secondary battery 100 of the disclosure, the width of the first protrusion 51111 along the radial direction of the secondary battery 100 is 2 to 10mm, preferably 3 to 6mm; the height of the first protrusion 51111 along the axial direction of the secondary battery 100 is 1 to 5mm, preferably 1 to 2mm. The first protrusion 51111 includes an annular top wall 517, and an inner ring wall 518 and an outer ring wall 519 connected with respect to the annular top wall 517. The inner ring wall 518 is connected to the first area 515, and the outer ring wall 519 is connected to the second area 516. The annular top wall 517, the inner ring wall 518, and the outer ring wall 519 are all flat structures, the annular top wall 517 is arranged parallel to the first area 515 or the second area 516, and the inner ring wall 518 and the outer ring wall 519 may be arranged perpendicularly to the annular top wall 517 or may be arranged obliquely. In this embodiment, in order to facilitate the molding process of the first protrusion 51111, both the inner ring wall 518 and the outer ring wall 519 are arranged obliquely with respect to the annular top wall 517. Taking a width W of the annular top wall 517 as the width of the first protrusion 51111, along the radial direction of the secondary battery 100, the width W of the annular top wall 517 is 2 to 10mm, preferably 3 to 6mm. Taking a height H of the inner ring wall 518 as the height of the first protrusion 51111, along the axial direction of the secondary battery 100, the height H of the inner ring wall 518 is 1 to 5mm, preferably 1 to 2mm, and the height of the first protrusion 51111 is not higher than the height of the terminal connecting portion 52 on the same side. By controlling the width W of the annular top wall 517 and the height H of the inner ring wall 518, the maximum displacement that the first protrusion 51111 can produce in the axial direction can be controlled, so that the maximum distance that the explosion-proof area 123 can move in the axial direction when the explosion-proof notch 122 breaks can be controlled, thereby realizing controlling the size of the pressure relief area of the secondary battery 100. In this embodiment, the width W of the annular top wall 517 is set to 3 to 6mm, and the height H of the inner ring wall 518 is set to 1 to 2mm, which can not only meet the size requirement of the pressure relief area of the secondary battery 100, but also prevent the first protrusion 51111 from occupying a large space inside the housing 10, thereby reducing the impact on the energy density of the secondary battery 100.

Referring to FIG. 3, FIG.6, FIG. 7, and FIG.8, in an example of the secondary battery 100 of the disclosure, the first protrusion 51111 is formed in an annular shape, and the outer diameter of the first protrusion 51111 is ≤38mm. Specifically, the annular top wall 517 has a circular ring structure, the outer ring wall 519 and the inner ring wall 518 have an approximate frustum structure, and the small ends of the outer ring wall 519 and the inner ring wall 518 both point in the direction away from the first area 515. A diameter D of the large end of the outer ring wall 519 is the outer diameter of the first protrusion 51111, and the diameter D of the large end of the outer ring wall 519 is smaller than or equal to 38mm. The size of the diameter D of the large end of the outer ring wall 519 directly affects the position of the first protrusion 51111 on the main body portion 51, which in turn affects the area sizes of the first area 515 and the second area 516. In this embodiment, by setting the diameter D of the large end of the outer ring wall 519 to be smaller than or equal to 38 mm, on the one hand, the minimum area of the second area 516 can be limited, so that the area of the second area 516 can meet the area requirement of being connected to the first electrode tab 41 by welding, thereby reducing the interference caused by the first protrusion 51111 to the welding position of the first electrode tab 41. On the other hand, the first area 515 may not be connected to the first electrode tab 41 by welding, when the explosion-proof area 123 is separated from the housing 10, the force resisting the first area 515 extending to the outside of the housing 10 can be reduced, thereby increasing the pressure relief speed of the secondary battery 100.

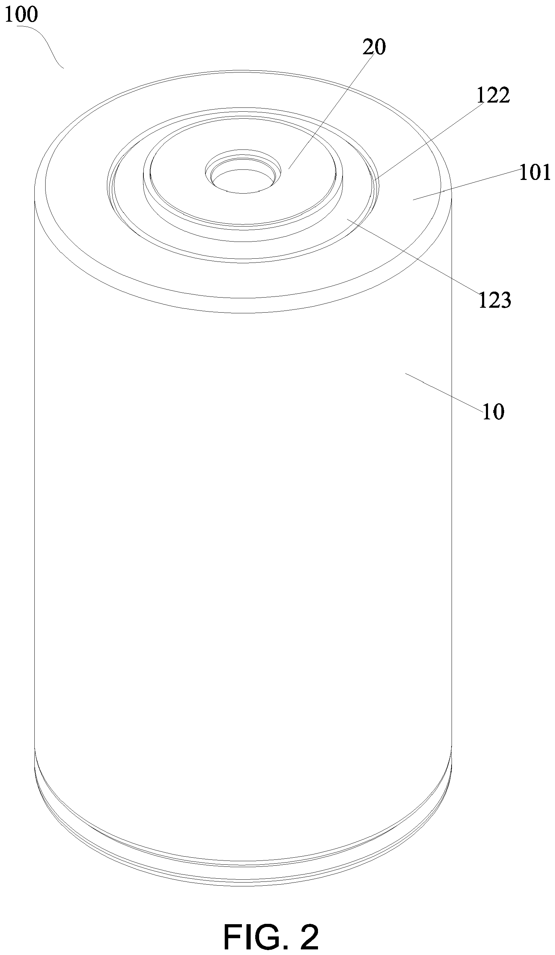

Referring to FIG. 2 to FIG. 4, in an example of the secondary battery 100 of the disclosure, the welding connection strength between the electrode terminal 20 and the terminal connecting portion 52 is greater than 50N. Since when the explosion-proof notch 122 breaks and the explosion-proof area 123 drives the electrode terminal 20 to separate from the housing 10, with the effect of the internal pressure of the housing 10, the electrode terminal 20 and the terminal connecting portion 52 bear a large pulling force, when the pulling force is greater than the welding connection strength between the electrode terminal 20 and the terminal connecting portion 52, there will be a risk that the electrode terminal 20 and the terminal connecting portion 52 separate from each other, causing the explosion-proof area 123 to drive the electrode terminal 20 to fly out from the housing 10, and the safety of the battery module level is affected. In this embodiment, by setting the welding connection strength between the electrode terminal 20 and the terminal connecting portion 52 to be greater than 50N, the connection strength between the electrode terminal 20 and the terminal connecting portion 52 can match with the amount of the pulling force generated between the electrode terminal 20 and the terminal connecting portion 52 when the explosion-proof notch 122 breaks, which effectively reduces the probability of the electrode terminal 20 separating from the terminal connecting portion 52, thereby reducing the probability that the electrode terminal 20 flies out from the housing 10 when the explosion-proof notch 122 breaks.

In this embodiment, there are many options for testing the welding connection strength between the electrode terminal 20 and the terminal connecting portion 52. However, preferably, in this embodiment, along the height direction of the secondary battery 100, a tool is used to clamp the terminal connecting portion 52, the terminal connecting portion 52 is pulled toward the side away from the electrode terminal 20, and simultaneously, the pulling force is gradually increased at a speed of 1N/S during the movement process until the position of the welding connection between the terminal connecting portion 52 and the electrode terminal 20 is broken. At this time, the corresponding pulling force tested is the value of the welding connection strength between the electrode terminal 20 and the terminal connecting portion 52.

Referring to FIG. 2 to FIG. 4, in an example of the secondary battery 100 of the disclosure, the electrode terminal 20 is disposed with a thinned area 201 along the thickness direction, and the terminal connecting portion 52 and the thinned area 201 are abutted against each other and connected by welding. The area and shape of the thinned area 201 are not limited and may be, for example, square, circular, annular, or special-shaped, as long as the size requirement of the welding area of the terminal connecting portion 52 is met. The welding method is also not limited, as long as the thinned area 201 and the terminal connecting portion 52 can be welded from the outside of the housing 10. However, when the thickness of the thinned area 201 exceeds the thickness of the terminal connecting portion 52, welding from the outside of the housing 10 requires penetrating the thinned area 201. At this time, a high energy laser has to be used for welding, the amount of laser energy is difficult to control, and leakage of the electrode terminal 20 may occur from welding through directly, or an insufficient energy may cause a non-wetting defect. In this embodiment, by disposing the thinned area 201, the thickness relationship between the electrode terminal 20 and the terminal connecting portion 52 can be adjusted, the thickness of the thinned area 201 can not only meet the welding requirement, but also prevent excessive heat from being transferred to the electrode assembly 40, and can also improve the problem of the non-wetting defect and the welding through caused by the thickness mismatch between the electrode terminal 20 and the terminal connecting portion 52 during welding.

Please refer to FIG. 4 and FIG. 8, in an example of the secondary battery 100 of the disclosure, the electrode terminal 20 is disposed with a second recess 202 on the side facing the electrode assembly 40, and the terminal connecting portion 52 is disposed with a second protrusion 521 on the side facing the electrode terminal 20. The second protrusion 521 and the second recess 202 are abutted against each other and connected by welding. The shape of the second recess 202 may be set to match the shape of the second protrusion 521. For example, the second recess 202 may be a circular, rectangular, or other structure, and the second protrusion 521 may be set to a corresponding circular, rectangular, or other structure. In this way, not only can the positioning connection between the second protrusion 521 and the second recess 202 be realized, but also the installation space occupied in the height direction of the housing 10 can be saved, which is beneficial to improving the energy density of the secondary battery 100. Certainly, the shape of the second recess 202 may not match the shape of the second protrusion 521. For example, the second recess 202 may be set as a circle, and the second protrusion 521 may be set as a rectangle, as long as the second protrusion 521 is ensured to be contained in the second recess 202.

The forming method between the terminal connecting portion 52 and the main body portion 51 is not limited and may be, for example, a welded connection, an adhesive connection, or an integrally formed connection, as long as the connection strength requirement between the terminal connecting portion 52 and the main body portion 51 is met. In an example of the secondary battery 100 of the disclosure, the terminal connecting portion 52 and the main body portion 51 are integrally formed and connected. The integrally formed connection may be integrated stamping molding, integrated casting molding, or additive molding. In this embodiment, by arranging the terminal connecting portion 52 and the main body portion 51 as an integrally formed part, the assembly efficiency of the current collecting member 50 can be improved, thereby improving the assembly efficiency of the secondary battery 100.

Referring to FIG. 8 to FIG. 10, in an example of the secondary battery 100 of the disclosure, the terminal connecting portion 52 and the main body portion 51 are separately structured, and the thickness of the terminal connecting portion 52 is greater than the thickness of the main body portion 51. The terminal connecting portion 52 may be fixedly connected to the main body portion 51 by methods such as welding or adhesive. In this embodiment, the terminal connecting portion 52 is an approximate protrusion column structure. Along the height direction of the secondary battery 100, an end of the terminal connecting portion 52 is abutted and connected to the thinned area 201 by welding, and another end of the terminal connecting portion 52 is abutted and connected to the surface of an end of the main body portion 51 by welding. By setting the terminal connecting portion 52 and the main body portion 51 as separately structured, the thickness of the terminal connecting portion 52 may be conveniently adjusted so that the thickness of the terminal connecting portion 52 is greater than the thickness of the main body portion 51, in turn, the welding parameters between the thinned area 201 and the terminal connecting portion 52 can be improved, which is beneficial to improving the welding quality between the electrode terminal 20 and the terminal connecting portion 52, and the welding connection strength between the electrode terminal 20 and the terminal connecting portion 52 is ensured.

Referring to FIG. 10, in an example of the secondary battery 100 of the disclosure, the terminal connecting portion 52 is connected to the main body portion 51 by welding, and the welding connection strength is greater than 50N. By setting the welding connection strength between the terminal connecting portion 52 and the main body portion 51 to be greater than 50N, the connection strength between the terminal connecting portion 52 and the main body portion 51 can match with the amount of the pulling force generated between the terminal connecting portion 52 and the main body portion 51 when the explosion-proof notch 122 breaks, which effectively reduces the probability of the terminal connecting portion 52 separating from the main body portion 51, thereby reducing the probability that the electrode terminal 20 drives the terminal connecting portion 52 to fly out from the housing 10.

The welding method between the terminal connecting portion 52 and the main body portion 51 is not limited and may be, for example, methods such as seam welding or penetration welding. However, preferably, please refer to FIG. 10. In an example of the secondary battery 100 of the disclosure, the terminal connecting portion 52 and the main body portion 51 are connected by penetration welding. Since the thickness of the terminal connecting portion 52 is greater than the thickness of the main body portion 51, when the penetration welding is performed on the terminal connecting portion 52 at a side of the main body portion 51, the welding quality is good. A welding mark 53 is formed between the main body portion 51 and the terminal connecting portion 52. The welding mark 53 is an annular structure, and the quantity of rounds of the welding mark 53 is at least two rounds. For example, the quantity of rounds of the welding mark 53 may be such as two rounds or three rounds. The specific distribution position of the welding marks 53 on the terminal connecting portion 52 is not limited. However, preferably, in this embodiment, the welding marks 53 and the terminal connecting portion 52 are arranged coaxially, and the quantity of the welding marks 53 is two rounds. By limiting the quantity of the welding marks 53 between the terminal connecting portion 52 and the main body portion 51 to be at least two rounds, the flow area of the electrical connection between the terminal connecting portion 52 and the main body portion 51 can be ensured, and the welding connection strength between the terminal connecting portion 52 and the main body portion 51 can be ensured, thereby reducing the probability of breakage between the terminal connecting portion 52 and the main body portion 51 when the explosion-proof notch 122 breaks.

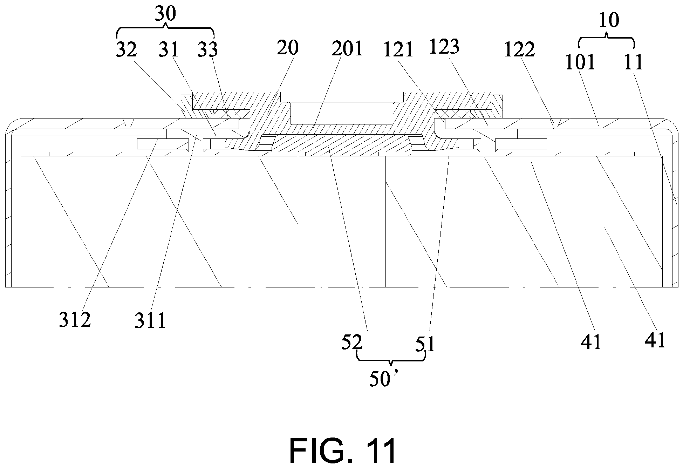

Please refer to FIG. 11 to FIG. 13. In an example of the secondary battery 100 of the disclosure, the main body portion 51 includes a supporting portion 512 disposed annularly, the terminal connecting portion 52 is located in the central area of the supporting portion 512, the deformable portion 511 includes a weak portion 5112 extending from the supporting portion 512 to the terminal connecting portion 52, and the terminal connecting portion 52 is connected to the main body portion 51 through the weak portion 5112. The shape and area of the supporting portion 512 are not limited. In this embodiment, the supporting portion 512 has a circular ring structure, the terminal connecting portion 52 has a protrusion column structure, and the terminal connecting portion 52 and the supporting portion 512 are coaxially arranged. Certainly, in other embodiments, the terminal connecting portion 52 may also be a structure of other shapes. The supporting portion 512 abuts against the first electrode tab 41 and is pressed tightly. The current collecting member 50 may be connected to the first electrode tab 41 by welding through the supporting portion 512 or may be connected to the first electrode tab 41 by welding through other parts disposed, and the disclosure is not limited thereto.

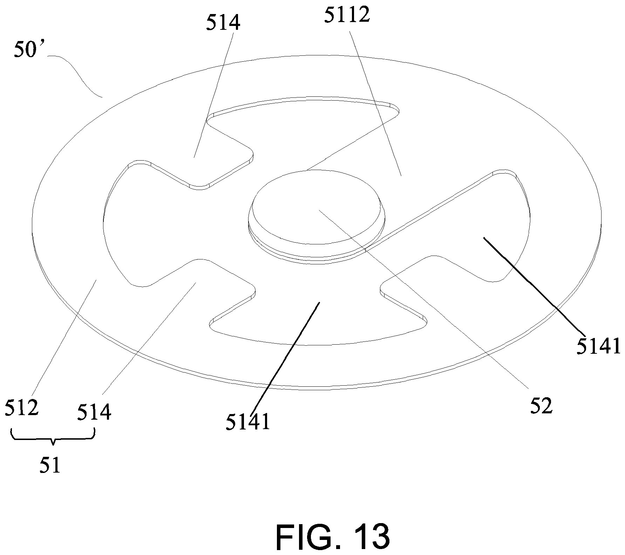

The weak portion 5112 extends along the radial direction of the supporting portion 512. An end of the weak portion 5112 is directly connected to the terminal connecting portion 52, and another end of the weak portion 5112 is directly connected to the supporting portion 512. The specific shape and area of the weak portion 5112 are not limited. The weak portion 5112 may be in any shape such as an arc shape or a strip shape. In this embodiment, the weak portion 5112 is a strip-shaped structure, and the extending direction of the strip shape is consistent with the direction of the radial direction of the supporting portion 512. The connection method between the weak portion 5112 and the supporting portion 512, and between the weak portion 5112 and the terminal connecting portion 52, may be a welded connection or an integrally formed connection, as long as the connection strength requirement is met. In this embodiment, referring to FIG. 13 to FIG. 15, the weak portion 5112 and the supporting portion 512 are connected by integrated stamping molding, and the weak portion 5112 and the terminal connecting portion 52 are connected by welding.

Since the weak portion 5112 is a cantilevered structure, the strength and stiffness of the weak portion 5112 are weak, when the explosion-proof notch 122 breaks, the explosion-proof area 123 drives the terminal connecting portion 52 to move toward the outside of the housing 10. When the main body portion 51 is pulled, the weak portion 5112 folds toward the outside of the housing 10, in this way, when the explosion-proof area 123 is separated from the housing 10, the explosion-proof area 123 can drive the electrode terminal 20 and the terminal connecting portion 52 to generate a certain displacement relative to the housing 10, so that the pressure relief area on the first end wall 101 is sufficient and the pressure relief requirement of the secondary battery 100 is met, and additionally, the weak portion 5112 can exert a pulling force on the terminal connecting portion 52 to reduce the probability that the terminal connecting portion 52 is separated from the main body portion 51. At the same time, since the weak portion 5112 may be designed to have a large size in the extending direction of the radial direction, when the weak portion 5112 is folded, the terminal connecting portion 52 can obtain a large amount of axial displacement, which is beneficial to forming a large pressure relief area, thereby increasing the pressure relief speed of the secondary battery 100.

It should be noted that the weak portion 5112 may be connected to the first electrode tab 41 by welding or may not be connected to the first electrode tab 41 by welding, and the disclosure is not limited thereto. In this embodiment, the weak portion 5112 is not connected to the first electrode tab 41 by welding, which can reduce the welding connection resistance generated when the weak portion 5112 is folded.

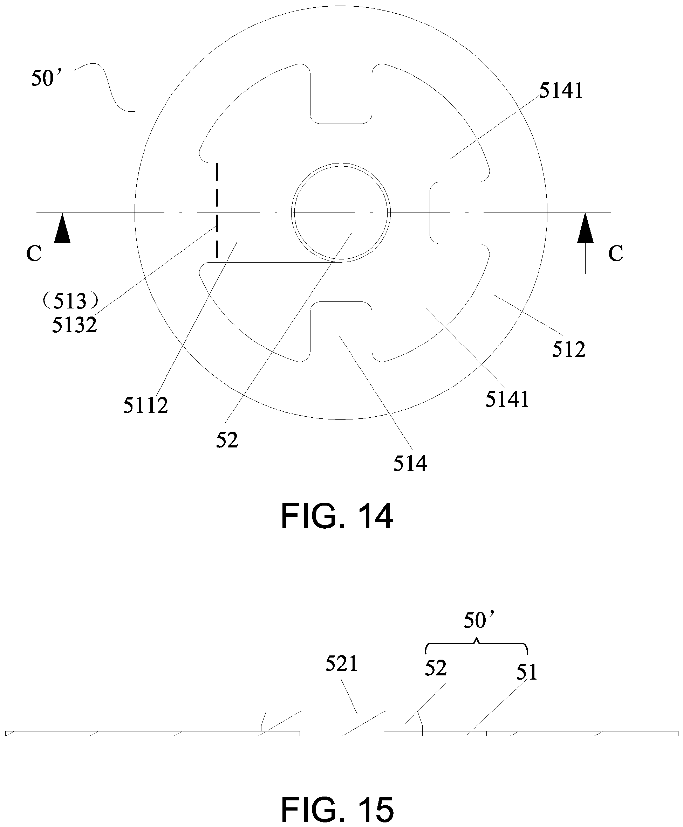

Referring to FIG. 14, FIG. 16, and FIG. 17, in an example of the secondary battery 100 of the disclosure, the weak portion 5112 includes a bend-guiding portion 513 that guides the weak portion 5112 to bend. The specific structure of the bend-guiding portion 513 is not limited and may be, for example, a bending structure or a crease structure corresponding to the bending direction of the weak portion 5112. The specific disposition position of the bend-guiding portion 513 on the weak portion 5112 is not limited, but preferably, in order to obtain a large folding size of the weak portion 5112 so that the terminal connecting portion 52 may generate a large axial displacement, in this embodiment, the bend-guiding portion 513 is disposed close to a side of the supporting portion 512. By disposing the bend-guiding structure in the weak portion 5112, a guiding effect can be achieved when the weak portion 5112 is bent, which not only can realize the rapid bending of the weak portion 5112, but also achieve the consistency of the degree of folding of the weak portion 5112 inside the housing 10, thereby ensuring the consistency of the pressure relief effect of the secondary battery 100.

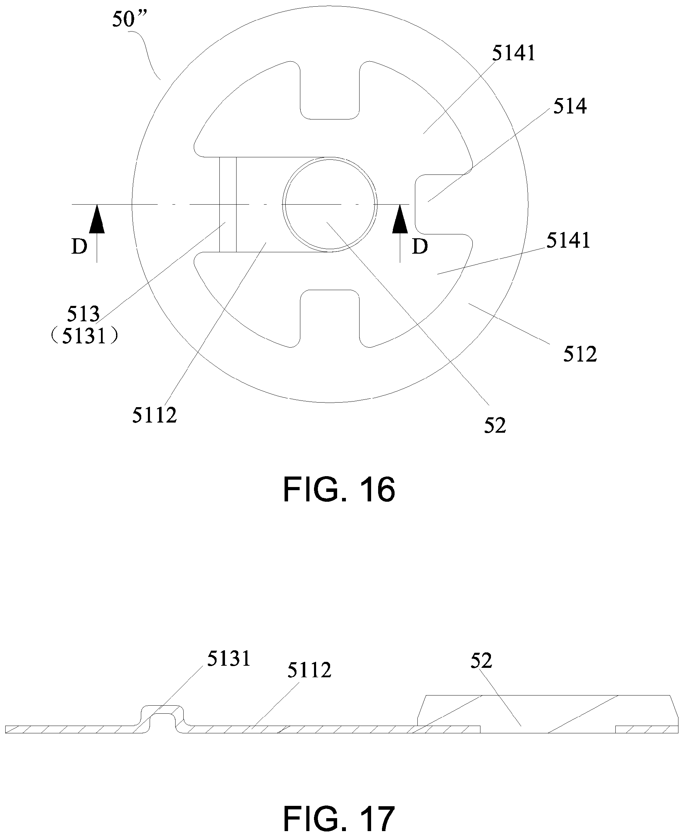

Referring to FIG. 16 and FIG. 17, in an example of the secondary battery 100 of the disclosure, the bend-guiding portion 513 includes a second bending portion 5131, and the second bending portion 5131 is disposed on the side of the weak portion 5112 close to the supporting portion 512. The second bending portion 5131 may be a protrusion structure, a recess structure, or any structure such as a protrusion-recess combined structure. In this embodiment, the structure of the second bending portion 5131 is a protrusion structure facing the side of the electrode terminal 20. The extending direction of the second bending portion 5131 is perpendicular to the extending direction of the weak portion 5112, which facilitates a good fold- guiding effect on the weak portion 5112. Certainly, in other embodiments, the extending direction of the second bending portion 5131 may also be arranged at other angles to the extending direction of the weak portion 5112, as long as the fold- guiding effect can be achieved. By disposing the second bending portion 5131, the weak portion 5112 forms a stress mutation area at the position of the second bending portion 5131, and then the weak portion 5112 is first folded and deformed from the stress mutation area when being folded, thereby the guiding effect of the folding action of the weak portion 5112 is achieved.

Referring to FIG. 14, in an example of the secondary battery 100 of the disclosure, the bend-guiding portion 513 includes a crease 5132, and the crease 5132 is disposed on a side of the weak portion 5112 close to the supporting portion 512. The direction of the crease 5132 is consistent with the folding direction of the weak portion 5112, and the extending direction of the crease 5132 is perpendicular to the extending direction of the weak portion 5112. In other embodiments, the extending direction of the crease 5132 may also be set at other angles to the extending direction of the weak portion 5112, as long as the fold- guiding effect can be achieved. By disposing the crease 5132 on the weak portion 5112, a predetermined folding position may be formed on the weak portion 5112. When the weak portion 5112 is being folded, the folding may be performed along the predetermined folding position, thereby the guiding effect of the folding action of the weak portion 5112 is achieved.

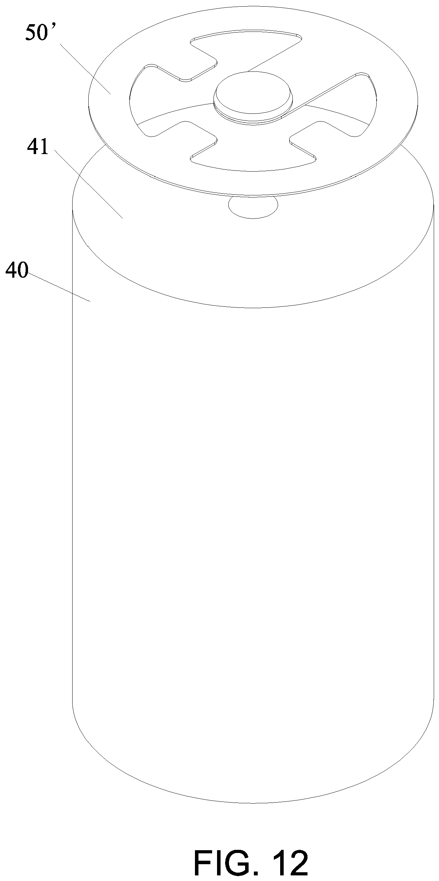

Referring to FIG. 12 to FIG. 14, in an example of the secondary battery 100 of the disclosure, the main body portion 51 further includes a plurality of electrode tab connecting portions 514, the plurality of electrode tab connecting portions 514 extend from the supporting portion 512 toward the center of the electrode assembly 40, and the plurality of electrode tab connecting portions 514 are spaced apart from the terminal connecting portion 52. The electrode tab connecting portion 514 is connected to the first electrode tab 41 by welding. The plurality of electrode tab connecting portions 514 may be, for example, integrally-connected structured, separately structured, or in a manner that hollow structures are disposed between adjacent electrode tab connecting portions 514, and the specific shape and quantity of the electrode tab connecting portions 514 are not limited. In this embodiment, the plurality of electrode tab connecting portions 514 have a strip-shaped structure. The plurality of electrode tab connecting portions 514 extend along the radial direction of the supporting portion 512, the plurality of electrode tab connecting portions 514 are alternately arranged in the circumferential direction of the supporting portion 512, and a hollow area 5141 is formed between adjacent electrode tab connecting portions 514. None of the plurality of electrode tab connecting portions 514 is connected to the terminal connecting portion 52 or the weak portion 5112. With this arrangement, on the one hand, the position of the electrode tab connecting portion 514 does not affect the folding of the weak portion 5112 toward the outside of the housing 10, thereby not affecting the pressure relief effect of the secondary battery 100. On the other hand, since the hollow area 5141 is formed between the electrode tab connecting portions 514, when the explosion-proof notch 122 breaks, the electrode tab connecting portion 514 is prone to folding and tearing toward the outside of the housing 10 with the effect of pressure, thereby further reducing the shielding of the pressure relief area of the surface of an end of the electrode assembly 40, which is beneficial to further improving the pressure relief effect of the secondary battery 100.

Referring to FIG. 11 and FIG. 13, in an example of the secondary battery 100 of the disclosure, along the height direction of the secondary battery 100, the orthographic projection of the explosion-proof area 123 is at least partially overlapped with the orthographic projection of the electrode tab connecting portion 514. With this arrangement, the shielding area of the electrode tab connecting portion 514 to the surface of the end of the electrode assembly 40 is large, thereby increasing the impact force that the electrode tab connecting portion 514 bears when the explosion-proof notch 122 breaks, which is beneficial to the electrode tab connecting portion 514 being folded and torn toward the outside of the housing 10, thereby further increasing the pressure relief effect of the secondary battery 100.

Referring to FIG. 11 and FIG. 13, in an example of the secondary battery 100 of the disclosure, along the height direction of the secondary battery 100, the orthographic projection of the supporting portion 512 is located outside of the orthographic projection of the explosion-proof area 123 and is not overlapped with the orthographic projection of the explosion-proof area 123. With this arrangement, the shielding of the supporting portion 512 to the pressure relief area of the surface of the end of the electrode assembly 40 can be further reduced, which is beneficial to improving the pressure relief effect of the secondary battery 100.

Referring to FIG. 3 and FIG. 4, in an example of the secondary battery 100 of the disclosure, the insulation sealing member 30 includes a first insulation member 31, a second insulation member 32, and a sealing member 33. The first insulation member 31 is located between the inner surface of the first end wall 101 and the current collecting member 50. The first insulation member 31 is pressed and fixed on the inner surface of the first end wall 101 through the second fixing portion 205 of the electrode terminal 20 to achieve the insulated connection between the inner surface of the first end wall 101 and the electrode terminal 20. The first insulation member 31 is at least partially located between the terminal hole 121 and the conductive portion 203 to realize the insulated connection between the conductive portion 203 and the terminal hole 121. The second insulation member 32 is located between the first fixing portion 204 and the outer surface of the first end wall 101. The second insulation member 32 is pressed and fixed on the outer surface of the first end wall 101 through the first fixing portion 204 to realize the insulated connection between the first fixing portion 204 and the outer surface of the first end wall 101. The sealing member is pressed and fixed between the outer surface of the first end wall 101 and the first fixing portion 204 to realize a sealed connection between the electrode terminal 20 and the terminal hole 121. Along the height direction of the secondary battery 100, the orthographic projection of the first insulation member 31 is located within the orthographic projection of the explosion-proof area 123. In this way, the installation position of the first insulation member 31 on the first end wall 101 does not shield the position of the explosion-proof notch 122, thereby not affecting the pressure relief effect of the secondary battery 100.

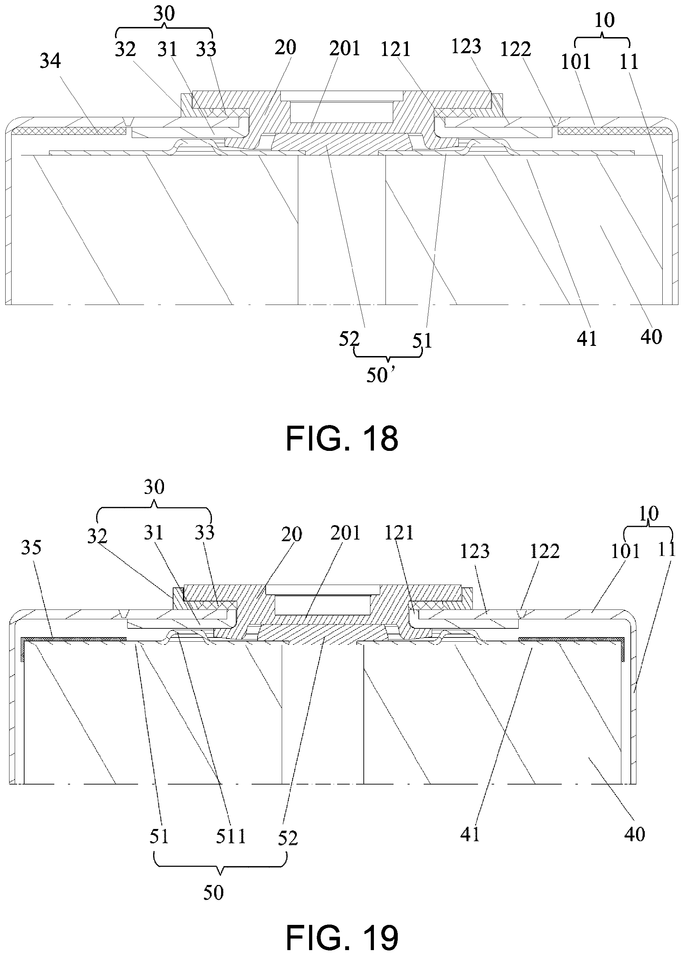

Referring to FIG. 18, in an example of the secondary battery 100 of the disclosure, the insulation sealing member 30 further includes a third insulation member 34. The third insulation member 34 is disposed in an area on the inner surface of the first end wall 101 that is not covered by the first insulation member 31. The third insulation member 34 may be an insulation washer. The insulation washer may be fixedly connected to the inner surface of the first end wall 101 or may be directly sandwiched between the first electrode tab 41 and the inner surface of the first end wall 101, as long as an insulation effect is achieved in the area on the inner surface of the first end wall 101 that is not covered by the first insulation member 31. In other embodiments, the third insulation member 34 may also be an insulation layer. The insulation layer is coated on the area on the inner surface of the first end wall 101 that is not covered by the first insulation member 31. In this way, an insulation effect is as well achieved in the area on the inner surface of the first end wall 101 that is not covered by the first insulation member 31. Certainly, in other embodiments, the third insulation member 34 may not be disposed, and the area on the inner surface of the first end wall 101 that is not covered by the first insulation member 31 is insulated by a gap with respect to the electrode assembly 40 opposite from each other.

It should be noted that, in order to reduce the impact of the third insulation member 34 on the explosion-proof notch 122, in the embodiment according to the disclosure, the third insulation member 34 does not cover the area of the explosion-proof notch 122 on the first end wall 101.

Referring to FIG. 19, in an example of the secondary battery 100 of the disclosure, the side of the electrode assembly 40 facing the electrode terminal 20 is covered with an insulation tape 35. The insulation tape 35 covers and fixes the current collecting member 50 on the electrode assembly 40, so that part of the surface of the side of the current collecting member 50 facing the first end wall 101 is covered by the insulation tape 35. Along the height direction of the secondary battery 100, the area of the current collecting member 50 covered by the insulation tape 35 is the orthographic projection surface of the insulation tape 35 on the surface of the end of the current collecting member 50 covering the area on the inner surface of the first end wall 101 that is not covered by the first insulation member 31. In this way, the insulation effect is as well achieved in the area on the inner surface of the first end wall 101 that is not covered by the first insulation member 31.

Referring to FIG. 11, FIG. 20, and FIG. 21, in an example of the secondary battery 100 of the disclosure, the first insulation member 31 includes a first ring body 311 and a second ring body 312 located on the outer periphery of the first ring body 311. The first ring body 311 and the second ring body 312 are detachably connected through a snap-in structure 313, and the snap-in structure 313 includes a snap-in protrusion 3131 and a snap-in groove 3132. The snap-in protrusion 3131 is disposed in the first ring body 311, the snap-in groove 3132 is disposed in the second ring body 312, and the snap-in protrusion 3131 is snapped into the corresponding snap-in groove 3132. In other embodiments, it may be that the snap-in protrusion 3131 is disposed on the second ring body 312 and the snap-in groove 3132 is disposed on the first ring body 311. By disposing the snap-in structure 313, the detachable connection between the first ring body 311 and the second ring body 312 can be realized, and the first insulation member 31 can be set from integrally structured to separately structured, which can improve problems such as poor molding process and unstable material properties caused by the overall structure being large. At the same time, since the snap-in structure 313 comprising the snap-in protrusion 3131 and the snap-in groove 3132 is disposed, the positioning accuracy and the assembly efficiency between the first ring body 311 and the second ring body 312 can be improved.

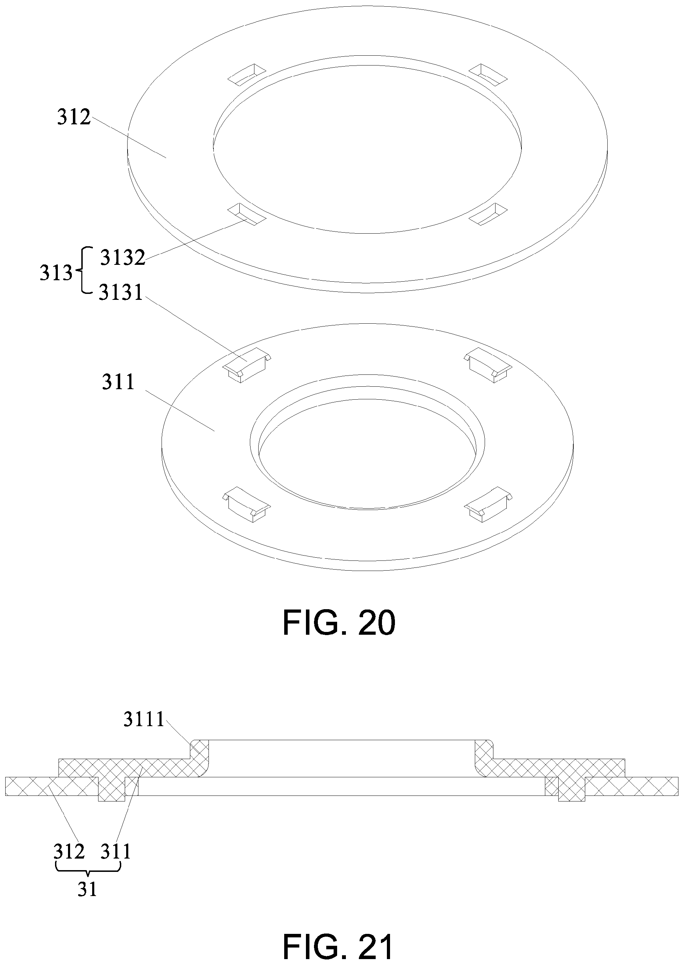

Referring to FIG. 20 and FIG. 21, in an example of the secondary battery 100 of the disclosure, the material of the first ring body 311 is PFA material, and the material of the second ring body 312 is different from the material of the first ring body 311. Since the insulation requirement between the electrode terminal 20 and the terminal hole 121 and the insulation requirement between the first end wall 101 and the electrode assembly 40 are different, generally, the material performance requirements for the first ring body 311 and the second ring body 312 are also different. In this embodiment, the material of the first ring body 311 is PFA material. The PFA material has good insulation properties and is suitable for the insulation requirement between the electrode terminal 20 and the terminal hole 121, but the material cost is high. The material of the second ring body 312 may be an ordinary insulation material that meets the performance requirement, such as LCP, PPS, or PP, and the material cost is low. Preferably, in this embodiment, the material of the second ring body 312 is LCP material. With this arrangement, the overall material cost of the first insulation member 31 can be reduced while meeting the insulation performance requirement of the first insulation member 31. Certainly, without considering the material cost, in other embodiments, the material of the second ring body 312 may also be PFA.

Referring to FIG. 11, FIG. 20, and FIG. 21. In an example of the secondary battery 100 of the disclosure, the first ring body 311 includes a protruded stage 3111 extending toward the side of the first end wall 101, the protruded stage 3111 extends into the terminal hole 121, the outer diameter of the protruded stage 3111 matches the diameter of the terminal hole 121, and the inner diameter of the protruded stage 3111 matches the outer diameter of the conductive portion 203 of the electrode terminal 20, so that at least part of the protruded stage 3111 is sandwiched between the side wall 11 of the terminal hole 121 and the side wall 11 of the electrode terminal 20, so as to realize the insulated connection between the electrode terminal 20 and the terminal hole 121. Along the height direction of the secondary battery 100, the first ring body 311 and the second ring body 312 are coaxially arranged, and the outer diameter of the first ring body 311 is larger than the inner diameter of the second ring body 312, so that the orthogonal projection surface of the first ring body 311 is partially overlapped with the orthographic projection surface of the second ring body 311. In this way, the gap generated during the abutting connection between the first ring body 311 and the second ring body 312 can be eliminated, thereby improving the insulation effect of the first insulation member 31.

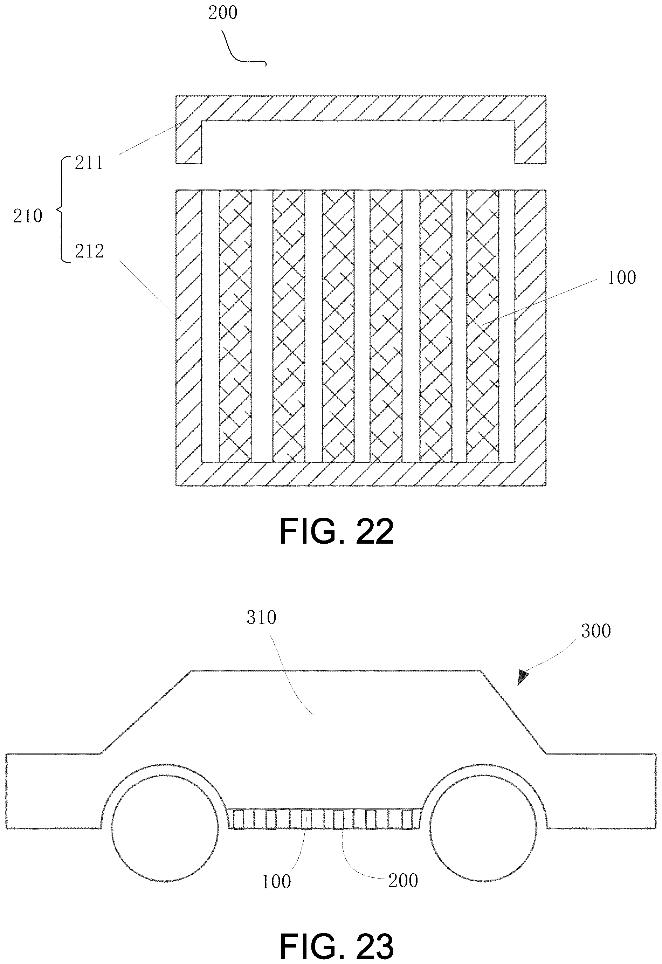

Referring to FIG. 22, the disclosure also provides a battery assembly 200, and the battery assembly 200 includes any of the above secondary batteries 100. The battery assembly 200 may be a battery module, or a battery pack, but is not limited thereto. In an embodiment of the disclosure, the battery assembly 200 includes a box body 210 and at least one secondary battery 100. The box body 210 includes a first box body 211 and a second box body 212. The first box body 211 and the second box body 212 cover each other to form a containing space. Multiple secondary batteries 100 are contained in the containing space, and the multiple secondary batteries 100 may be connected in series and/or parallel.

The disclosure also provides an electronic apparatus 300. The electronic apparatus 300 may be a vehicle, a mobile phone, a portable device, a laptop, a ship, a space vehicle, an electric toy, an electric tool, etc. The vehicle may be a fuel vehicle, a gas vehicle, or a new energy vehicle, and the new energy vehicle may be a pure electric vehicle, a hybrid vehicle, or a range-extended vehicle, etc. The space vehicle includes an aircraft, a rocket, a space shuttle, a spacecraft, etc. The electric toy includes a fixed or mobile electric toy, such as a game console, an electric car toy, an electric ship toy, an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer, but is not limited thereto.

In the electronic apparatus 300 of the disclosure, the electronic apparatus 300 includes a working part 310 and a battery assembly 200. The working part 310 is electrically connected to the battery assembly 200 to obtain electric energy support. The working part 310 may be a unit component that can obtain the electric energy of the battery assembly 200 and perform corresponding work, such as a blade rotating unit of a fan, a dust collection working unit of a vacuum cleaner, a wheel drive unit in an electric vehicle. The embodiments of the disclosure do not limit the electronic apparatus 300.

Referring to FIG. 23, in an embodiment of the electronic apparatus 300 of the disclosure, the electronic apparatus 300 is a vehicle, the working part 310 is the body of the vehicle, and the battery assembly 200 is fixedly installed on the body to provide driving force for the vehicle to achieve the operation of the vehicle.

In the secondary battery according to the disclosure, the explosion-proof notch and the electrode terminal are both disposed on the end wall of the housing, in this way, the same side arrangement between the explosion-proof notch and the electrode terminal can be realized, so that the electrical connection between the battery module levels and the thermal runaway systems may be installed on the same side of the battery module. Therefore, the cooling system can be arranged on another side of the battery module to reduce occupying the lateral dimension of the battery module, thus beneficial to improving the energy density of the battery module. At the same time, in the secondary battery according to the disclosure, the deformable portion is disposed on the main body portion of the current collecting member. When the explosion-proof area is separated from the housing, the deformable portion deforms to generate a certain displacement of the terminal connecting portion relative to the main body portion in the axial direction. On the one hand, when the explosion-proof area is separated from the housing, the explosion-proof area can drive the electrode terminal and the terminal connecting portion to generate a certain displacement in the axial direction, so that the pressure relief area on the first end wall is sufficient, thereby meeting the pressure relief requirement of the secondary battery. On the other hand, the deformable portion deforms to offset a part of the pulling force borne by the terminal connecting portion toward the outside of the housing, thereby reducing the probability of the terminal connecting portion separating from the main body portion. Therefore, the probability that the explosion-proof area and the electrode terminal fly out from the housing 10 can be reduced, thus avoiding serious problems such as short circuits and thermal runaway between other secondary batteries, and the safety performance of the battery module is improved. Therefore, the disclosure effectively overcomes some practical problems in the related art and has high utilization value and usage significance.

## Claims

1. A secondary battery (100), **characterized by** comprising:
a housing (10), wherein the housing (10) comprises an end wall (101) and a side wall (11) surrounding the end wall (101), the end wall (101) comprises a terminal hole (121) and an explosion-proof notch (122) surrounding the terminal hole (121), and an area surrounded by the explosion-proof notch (122) on the end wall (101) is an explosion-proof area (123);
an electrode terminal (20) covering the terminal hole (121) and fixed on the end wall (101), wherein an insulation sealing member (30) is disposed between the electrode terminal (20) and the end wall (101);
an electrode assembly (40) disposed in the housing (10), wherein a side of the electrode assembly (40) facing the end wall (101) comprises a first electrode tab (41); and
a current collecting member (50) disposed in the housing (10) and located between the first electrode tab (41) and the electrode terminal (20), wherein the current collecting member (50) comprises a main body portion (51) and a terminal connecting portion (52), the main body portion (51) is connected to the first electrode tab (41), and the terminal connecting portion (52) is connected to an inner surface of the electrode terminal (20) facing the electrode assembly (40);
wherein the main body portion (51) comprises a deformable portion (511) connected to the terminal connecting portion (52), in response to an internal pressure of the housing (10) being greater than a threshold value, the explosion-proof notch (122) breaks, the explosion-proof area (123) is at least partially separated from the housing (10) and drives the electrode terminal (20) to move to a side away from the electrode assembly (40), and the deformable portion (511) deforms to maintain a connection between the electrode terminal (20) and the main body portion (51).

2. The secondary battery (100) as claimed in claim 1, **characterized in that** the terminal connecting portion (52) is disposed in a central area of the main body portion (51), and the deformable portion (511) comprises a first bending structure (5111) surrounding the terminal connecting portion (52).

3. The secondary battery (100) as claimed in claim 2, **characterized in that** the first bending structure (5111) comprises a first recess (51112) and a first protrusion (51111), the first recess (51112) is recessed from a side of the main body portion (51) to another side of the main body portion (51), the first protrusion (51111) is formed correspondingly on the another side of the main body portion (51), and the first protrusion (51111) is arranged in an annular shape and surrounds an outer periphery of the terminal connecting portion (52).

4. The secondary battery (100) as claimed in claim 3, **characterized in that** the first protrusion (51111) is disposed on a side of the main body portion (51) facing the end wall (101), and the first recess (51112) is disposed on a side of the main body portion (51) facing the electrode assembly (40).

5. The secondary battery (100) as claimed in claim 1, **characterized in that** a welding connection strength between the electrode terminal (20) and the terminal connecting portion (52) is greater than 50N.

6. The secondary battery (100) as claimed in claim 5, **characterized in that** the electrode terminal (20) is disposed with a thinned area (201) along a thickness direction, and the terminal connecting portion (52) and the thinned area (201) are abutted against each other and connected by welding.

7. The secondary battery (100) as claimed in claim 1, **characterized in that** the electrode terminal (20) is disposed with a second recess (202) on a side facing the electrode assembly (40), the terminal connecting portion (52) is disposed with a second protrusion (521) on a side facing the electrode terminal (20), and the second protrusion (521) and the second recess (202) are abutted against each other and connected by welding.

8. The secondary battery (100) as claimed in claim 1, **characterized in that** the terminal connecting portion (52) and the main body portion (51) are separately structured, and a thickness of the terminal connecting portion (52) is greater than a thickness of the main body portion (51).

9. The secondary battery (100) as claimed in claim 8, **characterized in that** a welding mark (53) is formed between the terminal connecting portion (52) and the main body portion (51), the welding mark (53) is an annular structure, and a quantity of rounds of the welding mark (53) is at least two rounds.

10. The secondary battery (100) as claimed in claim 1, **characterized in that** the main body portion (51) comprises a supporting portion (512) disposed annularly, the terminal connecting portion (52) is located in a central area of the supporting portion (512), the deformable portion (511) comprises a weak portion (5112) extending from the supporting portion (512) to the terminal connecting portion (52), and the terminal connecting portion (52) is connected to the main body portion (51) through the weak portion (5112).

11. The secondary battery (100) as claimed in claim 10, **characterized in that** the weak portion (5112) comprises a bend-guiding portion (513) that guides the weak portion (5112) to bend.

12. The secondary battery (100) as claimed in claim 11, **characterized in that** the bend-guiding portion (513) comprises a second bending portion (5131), and the second bending portion (5131) is disposed on a side of the weak portion (5112) close to the supporting portion (512).

13. The secondary battery (100) as claimed in claim 11, **characterized in that** the bend-guiding portion (513) comprises a crease (5132), and the crease (5132) is disposed on a side of the weak portion (5112) close to the supporting portion (512).

14. The secondary battery (100) as claimed in claim 10, **characterized in that** the main body portion (51) further comprises a plurality of electrode tab connecting portions (514), the plurality of electrode tab connecting portions (514) extend from the supporting portion (512) toward a center of the electrode assembly (40), and the plurality of electrode tab connecting portions (514) are spaced apart from the terminal connecting portion (52).

15. The secondary battery (100) as claimed in claim 10, **characterized in that** along a height direction of the secondary battery (100), an orthographic projection of the supporting portion (512) is located outside of an orthographic projection of the explosion-proof area (123) and is not overlapped with the orthographic projection of the explosion-proof area (123).

## Amended claims

### Amended claims in accordance with Rule 137(2) EPC.

1. A secondary battery (100), comprising:
a housing (10), wherein the housing (10) comprises an end wall (101) and a side wall (11) surrounding the end wall (101), the end wall (101) comprises a terminal hole (121) and an explosion-proof notch (122) surrounding the terminal hole (121), and an area surrounded by the explosion-proof notch (122) on the end wall (101) is an explosion-proof area (123);
an electrode terminal (20) covering the terminal hole (121) and fixed on the end wall (101), wherein an insulation sealing member (30) is disposed between the electrode terminal (20) and the end wall (101);
an electrode assembly (40) disposed in the housing (10), wherein a side of the electrode assembly (40) facing the end wall (101) comprises a first electrode tab (41); and
a current collecting member (50) disposed in the housing (10) and located between the first electrode tab (41) and the electrode terminal (20), wherein the current collecting member (50) comprises a main body portion (51) and a terminal connecting portion (52), the main body portion (51) is connected to the first electrode tab (41), and the terminal connecting portion (52) is connected to an inner surface of the electrode terminal (20) facing the electrode assembly (40);
wherein the secondary battery (100) is **characterized in that**
the main body portion (51) comprises a deformable portion (511) connected to the terminal connecting portion (52), in response to an internal pressure of the housing (10) being greater than a threshold value, the explosion-proof notch (122) breaks, the explosion-proof area (123) is at least partially separated from the housing (10) and drives the electrode terminal (20) to move to a side away from the electrode assembly (40), and the deformable portion (511) deforms to generate a displacement of the terminal connecting portion (52) relative to the main body portion (51) in an axial direction to maintain a connection between the electrode terminal (20) and the main body portion (51).

2. The secondary battery (100) as claimed in claim 1, **characterized in that** the terminal connecting portion (52) is disposed in a central area of the main body portion (51), and the deformable portion (511) comprises a first bending structure (5111) surrounding the terminal connecting portion (52).

3. The secondary battery (100) as claimed in claim 2, **characterized in that** the first bending structure (5111) comprises a first recess (51112) and a first protrusion (51111), the first recess (51112) is recessed from a side of the main body portion (51) to another side of the main body portion (51), the first protrusion (51111) is formed correspondingly on the another side of the main body portion (51), and the first protrusion (51111) is arranged in an annular shape and surrounds an outer periphery of the terminal connecting portion (52).

4. The secondary battery (100) as claimed in claim 3, **characterized in that** the first protrusion (51111) is disposed on a side of the main body portion (51) facing the end wall (101), and the first recess (51112) is disposed on a side of the main body portion (51) facing the electrode assembly (40).

5. The secondary battery (100) as claimed in claim 1, **characterized in that** a welding connection strength between the electrode terminal (20) and the terminal connecting portion (52) is greater than 50N.

6. The secondary battery (100) as claimed in claim 5, **characterized in that** the electrode terminal (20) is disposed with a thinned area (201) along a thickness direction, and the terminal connecting portion (52) and the thinned area (201) are abutted against each other and connected by welding.

7. The secondary battery (100) as claimed in claim 1, **characterized in that** the electrode terminal (20) is disposed with a second recess (202) on a side facing the electrode assembly (40), the terminal connecting portion (52) is disposed with a second protrusion (521) on a side facing the electrode terminal (20), and the second protrusion (521) and the second recess (202) are abutted against each other and connected by welding.

8. The secondary battery (100) as claimed in claim 1, **characterized in that** the terminal connecting portion (52) and the main body portion (51) are separately structured, and a thickness of the terminal connecting portion (52) is greater than a thickness of the main body portion (51).

9. The secondary battery (100) as claimed in claim 8, **characterized in that** a welding mark (53) is formed between the terminal connecting portion (52) and the main body portion (51), the welding mark (53) is an annular structure, and a quantity of rounds of the welding mark (53) is at least two rounds.

10. The secondary battery (100) as claimed in claim 1, **characterized in that** the main body portion (51) comprises a supporting portion (512) disposed annularly, the terminal connecting portion (52) is located in a central area of the supporting portion (512), the deformable portion (511) comprises a weak portion (5112) extending from the supporting portion (512) to the terminal connecting portion (52), and the terminal connecting portion (52) is connected to the main body portion (51) through the weak portion (5112).

11. The secondary battery (100) as claimed in claim 10, **characterized in that** the weak portion (5112) comprises a bend-guiding portion (513) that guides the weak portion (5112) to bend.

12. The secondary battery (100) as claimed in claim 11, **characterized in that** the bend-guiding portion (513) comprises a second bending portion (5131), and the second bending portion (5131) is disposed on a side of the weak portion (5112) close to the supporting portion (512).

13. The secondary battery (100) as claimed in claim 11, **characterized in that** the bend-guiding portion (513) comprises a crease (5132), and the crease (5132) is disposed on a side of the weak portion (5112) close to the supporting portion (512).

14. The secondary battery (100) as claimed in claim 10, **characterized in that** the main body portion (51) further comprises a plurality of electrode tab connecting portions (514), the plurality of electrode tab connecting portions (514) extend from the supporting portion (512) toward a center of the electrode assembly (40), and the plurality of electrode tab connecting portions (514) are spaced apart from the terminal connecting portion (52).

15. The secondary battery (100) as claimed in claim 10, **characterized in that** along a height direction of the secondary battery (100), an orthographic projection of the supporting portion (512) is located outside of an orthographic projection of the explosion-proof area (123) and is not overlapped with the orthographic projection of the explosion-proof area (123).
